# EUROPÄISCHE PATENTSCHRIFT

(11) **EP 1 431 645 B1**
(45) Veröffentlichungstag und Bekanntmachung des Hinweises auf die Patenterteilung: **22.03.2006**
(21) Anmeldenummer: 03006037.0
(22) Anmeldetag: 19.03.2003
(51) Int. Cl.: F16L 19/10

(54) **Rohrverschraubung**
Threaded joint
Raccord vissé

(30) Priorität: 21.12.2002 DE 20219884 U
(43) Veröffentlichungstag der Anmeldung: 23.06.2004
(73) Patentinhaber: KULM HOLDING AG, 8355 Aadorf (CH)
(72) Erfinder: Westermann, Pirmin, 8155 Niederhasli (CH)
(74) Vertreter: Schwarz, Thomas

(56) Entgegenhaltungen:
- DE-A- 2 848 189
- DE-C- 828 176
- US-A- 2 693 374
- US-A- 2 930 635
- US-A- 5 188 401
- US-A- 5 529 349

## Beschreibung

Die Erfindung betrifft eine Rohrverschraubung zum Anschluß eines Rohres an ein Anschlußteil mit konischer Außenfläche, insbesondere zum Anschluß von Kupferrohren in der Kältetechnik, nach dem Oberbegriff des Anspruchs 1.

Eine derartige Rohrverschraubung ist aus der US-A-2 930 635 bekannt. Dort weist der innerhalb einer Überwurfmutter angeordnete Klemmring an seinem zum Anschlussnippel gewandten Ende eine innere konische Fläche auf, die zur Anlage an einer schrägen Gegenfläche am vorderen Ende des Anschlussnippels gelangt. Bei einer derartigen Rohrverschraubung müssen jedoch sowohl die konische Fläche des Klemmrings als auch die dazugehörige Gegenfläche des Anschlussnippels äußerst genau gefertigt und mit ihren Winkeln auch genau aufeinander abgestimmt werden, um die erforderliche Dichtwirkung zu erzielen. Da jedoch gerade die außen liegende Gegenfläche des Anschlussnippels besonders bei längerem Einsatz hohen Belastungen ausgesetzt ist und oftmals auch beschädigt wird, liegt die konische Innenfläche des Klemmrings nicht mehr plan auf der Gegenfläche auf, so dass bei derartigen Rohrverschraubungen vor allem nach mehrmaligem Ab- und Anschrauben von Rohren vielfach Dichtungsprobleme auftreten.

Aus der US-A-5 529 349 ist eine Rohrverschraubung bekannt, bei der das anzuschließende Rohrende zunächst mit einem gesonderten Formwerkzeug aufwändig gestaucht und umgebogen werden muss, bevor es ohne Klemmhülse allein durch eine Überwurfmutter an das Anschlussteil angeschraubt werden muss. Bei dieser Verschraubung wird durch einen speziellen Stempel an das vordere Ende des Rohres eine schräge Anlagefläche mit einer nach vorne vorstehenden Dichtwulst angeformt. Durch die hier erforderliche Verformung und Aufweitung des Rohrendes kann es jedoch besonders bei dünnwandigen Rohren zu einer Schwächung des Materials und zu einer Rissbildung kommen, wodurch die Dichtwirkung nicht mehr gewährleistet ist.

Aufgabe der Erfindung ist es, eine Rohrverschraubung der eingangs genannten Art zu schaffen, die auch ohne Zusatzelemente und ohne Vorarbeiten am Rohr eine dichte und einfach herstellbare Verbindung zwischen dem Anschlußteil und dem Rohr ermöglicht.

Diese Aufgabe wird durch eine Rohrverschraubung mit den Merkmalen des Anspruchs 1 gelöst. Zweckmäßige Ausgestaltungen und vorteilhafte Weiterbildungen der Erfindung sind Gegenstand der Unteransprüche.

Ein wesentlicher Vorteil der erfindungsgemäßen Rohrverschraubung besteht darin, daß keine vorherige Bearbeitung oder Verformung des anzuschließenden Rohres erforderlich ist. Dadurch tritt auch keine Schwächung des Rohrendes und eine dadurch bedingte Rißgefähr ein. Auch eine anfällige Lötstelle ist nicht vorhanden. Eine derartige Verbindung ist unanfällig gegen Vibrationen und äußerst robust gegen Radialkräfte, die auf das Rohr einwirken können. Die Verbindung ist außerdem rein metallisch dichtend und deswegen unempfindlich gegen Temperaturschwankungen und hohe Temperaturen. Im Gegensatz zu bekannten Ausführungen ist ferner kein zusätzliches Dichtelement erforderlich. Der Klemmring selbst übernimmt die Dichtfunktion, so daß auf separate Dichtscheiben oder Dichtringe verzichtet werden kann.

Weitere Besonderheiten und Vorzüge der Erfindung ergeben sich aus der folgenden Beschreibung anhand der Zeichnung. Es zeigen:
- **Figur 1**: eine erste Ausführungsform einer Rohrverschraubung in einem Längsschnitt und
- **Figur 2**: ein erfindungsgemäßes Ausführungsbeispiel einer Rohrverschraubung in einem Längsschnitt.

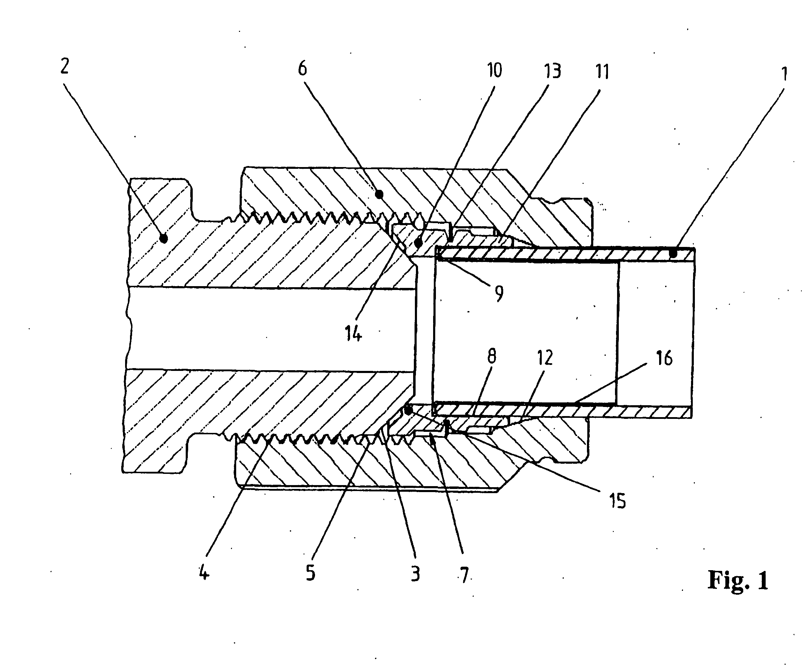

Die in Figur 1 schematisch dargestellte Rohrverschraubung ist zum Anschluß eines Rohres 1 an ein in Form eines Anschlußnippels ausgeführtes Anschlußteil 2 mit einer vorderen konischen Außenfläche 3 bestimmt. Das Anschlußteil 2 enthält ein Außengewinde 4, auf das eine mit entsprechendem Innengewinde 5 versehene hülsenförmige Überwurfmutter 6 aufgeschraubt wird. Innerhalb der Überwurfmutter 6 ist ein aus Metall bestehender Klemmring 7 zur klemmenden und abgedichteten Halterung des Rohres 1 an dem Anschlußteil 2 angeordnet.

Der Klemmring 7 weist eine an den Durchmesser des Rohres 1 angepaßte innere Aufnahmeöffnung 8 mit einer Anschlagfläche 9 zur Aufnahme des Rohrendes auf. Der Klemmring 7 enthält einen über das Rohrende axial vorstehenden dickeren Anlagebereich 10 und einen über dem Rohrende angeordneten dünneren Klemmbereich 11, der an seiner Außenseite zur Anlage an einer konischen Innenfläche 12 der Überwurfmutter 6 gelangt. Zwischen dem Anlagebereich 10 und dem Klemmbereich 11 ist an der Außenseite des Klemmrings 7 eine V-förmige umlaufende Nut 13 vorgesehen, die dem Klemmring 7 eine gewisse Elastizität zur Aufnahme von Druckstößen und Vibrationen verleiht. Der Klemmring 7 weist an seinem zum Anschlußteil 2 gewandten Ende außerdem eine zu der konischen Außenfläche 3 des Anschlußteils 2 korrespondierende konische Innenfläche 14 mit einer Dichtwulst 15 auf, die beim Anziehen der Überwurfmutter zur abdichtenden Anlage an der unter 45° verlaufenden konischen Außenfläche des Anschlußteils 2 kommt. In das Rohrende ist ferner eine Stützhülse 16 zur Stabilisierung eingesetzt.

Beim Anziehen der Überwurfmutter 6 wird der Klemmring 7 mit der Dichtwulst 15 an die vordere konische Außenfläche 3 des Anschlußteils 2 angepresst. Durch dieses Anpressen wird eine metallisch dichtende Verbindung zwischen dem Anlageflächen des Anschlußteils 2 und des Klemmrings 7 erreicht. Es sind keine gesonderten Dichtelemente erforderlich. Die beim Anziehen der Überwurfmutter entstehenden Axialkräfte werden über das Außengewinde 4 von dem Anschlußteil 2 aufgenommen. Durch das Anziehen der Überwurfmutter 6 wird außerdem der dünnere Klemmbereich 11 eingeschnürt. Durch diese Einschnürung wird das Rohr 1 zur Verhinderung des Ausgleitens bei auftretendem Innendruck und/oder Druckstößen gehalten. Die V-Nut 13 am Klemmring 7 verleiht diesem eine bessere Elastizität, um Druckstöße und Vibrationen aufnehmen zu können.

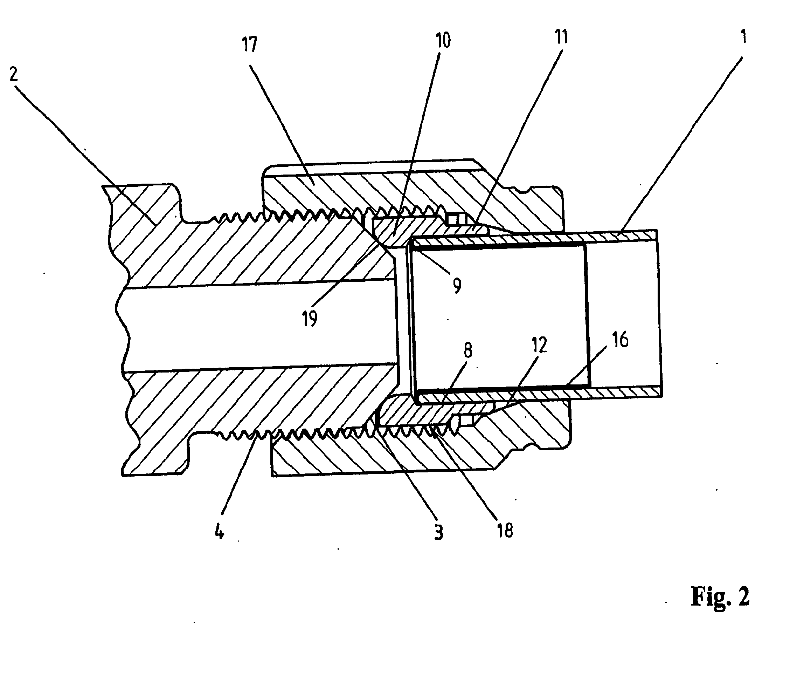

In Figur 2 ist eine erfindungsgemäße Rohrverschraubung zum Anschluß eines Rohres 1 an ein in Form eines Anschlußnippels ausgeführtes Anschlußteil 2 mit einer vorderen konischen Außenfläche 3 gezeigt. Auch bei dieser Ausführung enthält das Anschlußteil 2 ein Außengewinde 4, auf das eine mit einem entsprechenden Innengewinde 5 versehene hülsenförmige Überwurfmutter 17 aufgeschraubt ist. Diese Überwurfmutter 17 unterscheidet sich von der Überwurfmutter 6 der ersten Ausführungsform dadurch, daß sie den bei der Überwurfmutter 6 von Figur 1 vorhandenen zusätzlichen Absatz im Bereich der dort vorgesehen V-förmigen Nut 13 des dortigen Klemmrings 7 nicht aufweist. Dadurch kann sich der beim zweiten Ausführungsbeispiel verwendete Klemmring 18 bei der Montage weniger verkanten oder verkeilen. Die Überwurfmutter 17 weist nur noch eine unter einem Winkel von 45° verlaufende konische Anschlagfläche für den Klemmring 18 auf. Dadurch wird eine optimale Flächenpressung für den mechanischen Anschlag zwischen der Überwurfmutter 17 und dem Klemmring 18 ermöglicht.

Der Klemmring 18 enthält einen über das Rohrende axial vorstehenden dickeren Anlagebereich 10 und einen über dem Rohrende angeordneten dünneren Klemmbereich 11, der an seiner Außenseite zur Anlage an einer konischen Innenfläche 12 der Überwurfmutter 17 gelangt. Der Klemmring 18 enthält außerdem eine an den Durchmesser des Rohres 1 angepaßte innere Aufnahmeöffnung 8 mit einer Anschlagfläche 9 zur Aufnahme des Rohrendes. In dieses Rohrende ist ebenfalls eine Stützhülse 16 zur Stabilisierung einsetzbar. Die Überwurfmutter 17 enthält ebenfalls eine konische Innenfläche 12, durch welche der Klemmbereich 11 des Klemmrings 18 beim Anziehen der Überwurfmutter 17 nach innen gedrückt wird. Da diese Merkmale auch bei der ersten Ausführungsform vorhanden sind, wurden auch die entsprechenden Bezugszeichen verwendet.

Im Unterschied zum Klemmring 6 weist der Klemmring 18 an seiner zum Anschlußteil weisenden Stirnseite jedoch keine konische Innenfläche mit vorstehender Dichtwulst, sondern eine nach außen gewölbte, d.h. konvexe Anlagefläche 19 zur Anlage an der konischen Außenseite des Anschlussteils auf. Dadurch werden eine Reduktion der Anzugsdrehmomente und eine bessere Anpassung des Klemmrings an unterschiedliche Ausführungen des Anschlußteils ermöglicht. Außerdem ist eine robustere Bauweise der Verschraubung erreichbar. Der Klemmring 18 enthält an seiner Außenseite nur noch einen Absatz und weist keine V-Nut am Außenumfang auf, wodurch die Festigkeit des Klemmrings erhöht und die Druckbeständigkeit der Verschraubung weiter verbessert werden kann.

Auch bei dieser Ausführung der Rohrverschraubung wird der Klemmring 18 beim Anziehen der Überwurfmutter 17 an die vordere konische Außenfläche 3 des Anschlußteils 2 angepresst. Durch dieses Anpressen wird eine metallisch dichtende Verbindung zwischen dem Anlageflächen des Anschlußteils 2 und des Klemmrings 18 erreicht. Es sind auch hier keine gesonderten Dichtelemente erforderlich.

## Patentansprüche

1. Rohrverschraubung zum Anschluß eines Rohrs (1) an ein Anschlußteil (2) mit einer konischen Außenfläche (3), insbesondere zum Anschluß von Kupferrohren in der Kältetechnik, mit einer hülsenförmigen Überwurfmutter (17) zur Verschraubung mit dem Anschlußteil (2) und einem innerhalb der Überwurfmutter (17) angeordneten Klemmring (18), der einen über das Ende des Rohrs (1) axial vorstehenden dickeren Anlagebereich (10) und einen über dem Ende des Rohrs (1) angeordneten dünneren Klenunbereich (11) aufweist, **dadurch gekennzeichnet, daß** der Klemmring (18) an seiner zum Anschlußteil (2) weisenden Stirnseite eine nach außen gewölbte Anlagefläche (19) zur Anlage an der konischen Außenfläche (3) des Anschlußteils (2) aufweist und daß der Klemmbereich (11) an seiner zylindrischen Außenseite zur Anlage an einer konischen Innenfläche (12) der Überwurfmutter (17) gelangt.

2. Rohrverschraubung nach Anspruch 1, **dadurch gekennzeichnet, daß** der Klemmring (18) eine an den Durchmesser des Rohrs (1) angepaßte innere Aufnahmeöffnung (8) mit einer Anschlagfläche (9) aufweist.

3. Rohrverschraubung nach Anspruch 1 oder 2, **dadurch gekennzeichnet, daß** der Klemmring (18) aus Metall besteht.

4. Rohrverschraubung nach einem der Ansprüche 1 bis 3, **dadurch gekennzeichnet, daß** in das anzuschließende Ende des Rohrs (1) eine Stützhülse (16) eingesteckt ist.

## Claims

1. Threaded pipe joint for connection of a pipe (1) to a connecting part (2) with a tapering external face (3), in particular for connection of copper pipes in refrigeration engineering, with a sleeve-shaped union nut (17) for screwing to the connecting part (2) and a clamping ring (18) which is arranged inside the union nut (17) and exhibits a thicker contact region (10) protruding axially beyond the end of the pipe (1) and a thinner clamping region (11) arranged over the end of the pipe (1), **characterised in that** on its end side facing the connecting part (2) the clamping ring (18) exhibits an outwardly curved contact face (19) for contact on the tapering external face (3) of the connecting part (2), and **in that** on its cylindrical external side the clamping region (11) comes into contact on a tapering internal face (12) of the union nut (17).

2. Threaded pipe joint according to claim 1, **characterised in that** the clamping ring (18) exhibits an inner receiving opening (8) matched to the diameter of the pipe (1) and has a stop face (9).

3. Threaded pipe joint according to claim 1 or 2, **characterised in that** the clamping ring (18) is made of metal.

4. Threaded pipe joint according to one of claims 1 to 3, **characterised in that** a supporting sleeve (16) is inserted into the end of the pipe (1) to be connected.

## Revendications

1. Raccord vissé pour tubes pour raccorder un tube (1) à une pièce de raccordement (2) comportant une surface extérieure conique (3), en particulier pour raccorder des tubes en cuivre dans la technique frigorifique, comportant un écrou d'accouplement en forme de douille (17) pour le vissage avec la pièce de raccordement (2) et une bague de serrage (18) agencée à l'intérieur de l'écrou d'accouplement (17) qui présente une zone de contact plus épaisse (10) faisant saillie axialement au-delà de l'extrémité du tube (1) et une zone de serrage plus mince (11) agencée au-dessus de l'extrémité du tube (1), **caractérisé en ce que** la bague de serrage (18) présente, sur son côté frontal en face de la pièce de raccordement (2), une surface de contact (19) courbée vers l'extérieur pour le contact avec la surface extérieure conique (3) de la pièce de raccordement (2) et **en ce que** la zone de serrage (11) vient s'appliquer sur une surface intérieure conique (12) de l'écrou d'accouplement (17) sur son côté extérieur cylindrique.

2. Raccord vissé pour tubes selon la revendication 1, **caractérisé en ce que** la bague de serrage (18) présente une ouverture de réception intérieure (8) adaptée au diamètre du tube (1) comportant une surface de contact (9).

3. Raccord vissé pour tubes selon la revendication 1 ou 2, **caractérisé en ce que** la bague de serrage (18) est constituée de métal.

4. Raccord vissé pour tubes selon l'une des revendications 1 à 3, **caractérisé en ce que** l'extrémité du tube (1) à raccorder est insérée dans une douille de soutien (16).
